# EUROPEAN PATENT APPLICATION

(11) **EP 4 319 265 A1**
(43) Date of publication of application: **07.02.2024**
(21) Application number: 22815084.3
(22) Date of filing: 23.05.2022
(51) Int. Cl.: H04W 24/08, H04L 5/00

(54) **DOWNLINK CONTROL INFORMATION (DCI) SENDING METHOD AND COMMUNICATION APPARATUS**

(30) Priority: 31.05.2021 CN 202110602053
(71) Applicant: Huawei Technologies Co., Ltd., Shenzhen, Guangdong 518129 (CN)
(72) Inventor: LUO, Qingquan, Shenzhen, Guangdong 518129 (CN); CHANG, Junren, Shenzhen, Guangdong 518129 (CN); FENG, Shulan, Shenzhen, Guangdong 518129 (CN); XIE, Xi, Shenzhen, Guangdong 518129 (CN)
(74) Representative: MERH-IP Matias Erny Reichl Hoffmann Patentanwälte PartG mbB
(86) International application number: PCT/CN2022/094575
(87) International publication number: WO 2022/253037

(57) **Abstract**

This application provides a downlink control information DCI sending method and a communication apparatus. The method includes: A terminal device sends first information to a network device, where the first information indicates a quantity N, and the quantity N includes a quantity of pieces of DCI that the terminal device supports to receive in a first span of a physical downlink control channel. Further, the terminal device receives the DCI on the PDCCH, where a valid quantity of pieces of DCI in the first span is less than or equal to the quantity N. According to the DCI sending method, the quantity of pieces of DCI received by the terminal device can be more flexible, and the quantity of pieces of DCI received by the terminal device can meet a requirement of the terminal device.

## Description

This application claims priority to Chinese Patent Application No. 202110602053.0, filed with the China National Intellectual Property Administration on May 31, 2021 and entitled "DOWNLINK CONTROL INFORMATION DCI SENDING METHOD AND COMMUNICATION APPARATUS", which is incorporated herein by reference in its entirety.

### TECHNICAL FIELD

This application relates to the field of communication technologies, and in particular, to a downlink control information DCI sending method and a communication apparatus.

### BACKGROUND

In a new radio (new radio, NR) standard, a slot used for uplink transmission is supported, and is denoted as a U slot; a slot used for downlink transmission is supported, and is denoted as a D slot; a slot with both uplink and downlink configuration is also supported, and is denoted as an S slot. The U slot merely includes an uplink symbol (uplink symbol, U), and U is used only for uplink transmission and cannot be used for downlink transmission. The D slot merely includes a downlink symbol (downlink symbol, D), and D is used only for downlink transmission and cannot be used for uplink transmission. The S slot includes U, D, and a flexible symbol (flexible symbol, F), and F may be used for both downlink transmission and uplink transmission. All slots configured by a network device are D, S, and U slots.

To improve data transmission performance of a terminal device, it is set in a communication protocol that when the network device configures, for the terminal device, downlink control information (downlink control information, DCI) for uplink scheduling or downlink scheduling, a plurality of symbols may be configured in one D slot or S slot to transmit the DCI. However, as a quantity of pieces of DCI configured in the D slot or the S slot increases, a quantity of tasks of the terminal device in the D slot or the S slot gradually increases. Consequently, load of the terminal device in the D slot or the S slot gradually increases, and there is a possibility that power consumption of the terminal device increases. This DCI sending method is not flexible enough due to a possibility that there is a difference between terminal devices.

### SUMMARY

This application provides a downlink control information DCI sending method and a communication apparatus, to improve flexibility of DCI sending.

According to a first aspect, this application provides a DCI sending method. The method includes: A terminal device sends first information to a network device, where the first information indicates a quantity N, and the quantity N includes a quantity of pieces of DCI that the terminal device supports to receive in a first span of a physical downlink control channel PDCCH. The terminal device receives the DCI on the PDCCH, where the quantity of pieces of DCI in the first span is less than or equal to the quantity N.

According to the method described in the first aspect, the terminal device reports the first information to the network device, so that the network device sends the DCI to the terminal device based on the first information reported by the terminal device, to improve flexibility of DCI sending, and enable a quantity of pieces of DCI sent by the network device to the terminal device to meet a requirement of the terminal device.

In a possible implementation, the terminal device determines the quantity N based on performance requirement information of the terminal device. The performance requirement information includes one or more of power consumption information, terminal type information, or transmission performance information. The possible implementation is implemented, so that a quantity of pieces of DCI sent by the network device to the terminal device meets a requirement of the terminal device.

In a possible implementation, when the terminal device is in a first scenario mode, the terminal device sends second information to the network device, where the second information indicates a quantity M, and the quantity M includes a quantity of pieces of DCI that the terminal device requests to receive in the first span of the PDCCH in the first scenario mode, and the quantity M is a positive integer greater than 0 and less than the quantity N. The possible implementation is implemented, and on the basis of the quantity N supported by the terminal device, the quantity of pieces of DCI in the first span of the PDCCH is further reduced based on an actual application scenario of the terminal device, so that the quantity of pieces of DCI received by the terminal device in the first span meets a requirement of the terminal device, and power consumption is reduced.

In a possible implementation, the terminal device receives third information from the network device. The third information notifies the network device to send the PDCCH to the terminal device based on the second information.

In a possible implementation, the terminal device receives fourth information from the network device. The fourth information notifies the network device to send the PDCCH to the terminal device based on the first information.

In a possible implementation, the second information is radio resource control RRC signaling, media access control MAC signaling, or assistance information.

In a possible implementation, in the first scenario mode, power consumption of the terminal device is less than a first value, or a ratio of a downlink slot to an uplink slot in the PDCCH is greater than a second value, or a delay requirement of data transmission of the terminal device is greater than a third value.

According to a second aspect, this application provides a DCI sending method. The method includes: A network device receives first information from a terminal device, where the first information indicates a quantity N, and the quantity N includes a quantity of pieces of DCI that the terminal device supports to receive in a first span of a physical downlink control channel PDCCH. The network device sends the DCI to the terminal device through the PDCCH, where a valid quantity of pieces of DCI in the first span is less than or equal to the quantity N.

According to the method described in the second aspect, the terminal device reports the first information to the network device, so that the network device sends the DCI to the terminal device based on the first information reported by the terminal device, to improve flexibility of DCI sending, and enable a quantity of pieces of DCI sent by the network device to the terminal device to meet a requirement of the terminal device.

In a possible implementation, when the terminal device is in a first scenario mode, the network device receives second information from the terminal device, where the second information indicates a quantity M, the quantity M includes a quantity of pieces of DCI that the terminal device requests to receive in the first span of the PDCCH in the first scenario mode, and the quantity M is a positive integer greater than 0 and less than the quantity N. The possible implementation is implemented, and on the basis of the quantity N supported by the terminal device, the network device may further reduce the quantity of pieces of DCI in the first span of the PDCCH based on an actual application scenario of the terminal device, so that the quantity of pieces of DCI received by the terminal device in the first span meets a requirement of the terminal device, and power consumption is reduced.

In a possible implementation, the network device determines, based on a scheduling situation of the network device, to send the DCI to the terminal device based on the second information or the first information. When the network device determines to send the DCI to the terminal device based on the second information, the network device sends third information to the terminal device, where the third information notifies the network device to send the DCI to the terminal device based on the second information. The network device sends the DCI to the terminal device through the PDCCH based on the second information, where the quantity of pieces of DCI in the first span is less than or equal to the quantity M.

In a possible implementation, when the network device determines to send the DCI to the terminal device based on the first information, the network device sends fourth information to the terminal device, where the fourth information notifies the network device to send the DCI to the terminal device based on the first information. The network device sends the DCI to the terminal device through the PDCCH, where the quantity of pieces of DCI in the first span is less than or equal to the quantity N.

In a possible implementation, the second information is radio resource control RRC signaling, media access control MAC signaling, or assistance information.

In a possible implementation, in the first scenario mode, power consumption of the terminal device is less than a first value, or a ratio of a downlink slot to an uplink slot in the PDCCH is greater than a second value, or a delay requirement of data transmission of the terminal device is greater than a third value.

According to a third aspect, this application provides a communication apparatus. The communication apparatus includes a communication unit and a processing unit. The communication unit is configured to: send first information to a network device, where the first information indicates a quantity N, and the quantity N includes a quantity of pieces of DCI that a terminal device supports to receive in a first span of a physical downlink control channel PDCCH; and receive the DCI on the PDCCH, where the quantity of pieces of DCI in the first span is less than or equal to the quantity N.

In a possible implementation, the processing unit is configured to determine the quantity N based on performance requirement information of the terminal device. The performance requirement information includes one or more of power consumption information, terminal type information, or transmission performance information.

In a possible implementation, when the terminal device is in a first scenario mode, the communication unit is configured to send second information to the network device, where the second information indicates a quantity M, the quantity M includes a quantity of pieces of DCI that the terminal device requests to receive in the first span of the PDCCH in the first scenario mode, and the quantity M is a positive integer greater than 0 and less than the quantity N.

In a possible implementation, the communication unit is configured to receive third information from the network device. The third information notifies the network device to send the PDCCH to the terminal device based on the second information.

In a possible implementation, the communication unit is configured to receive fourth information from the network device. The fourth information notifies the network device to send the PDCCH to the terminal device based on the first information.

In a possible implementation, the second information is radio resource control RRC signaling, media access control MAC signaling, or assistance information.

In a possible implementation, in the first scenario mode, power consumption of the terminal device is less than a first value, or a ratio of a downlink slot to an uplink slot in the PDCCH is greater than a second value, or a delay requirement of data transmission of the terminal device is greater than a third value.

According to a fourth aspect, this application provides a communication apparatus. The communication apparatus includes a communication unit and a processing unit. The communication unit is configured to: receive first information from a terminal device, where the first information indicates a quantity N, and the quantity N includes a quantity of pieces of DCI that the terminal device supports to receive in a first span of a physical downlink control channel PDCCH; and send the DCI to the terminal device, where a valid quantity of pieces of DCI in the first span is less than or equal to the quantity N.

In a possible implementation, when the terminal device is in a first scenario mode, the communication unit is configured to receive second information from the terminal device, where the second information indicates a quantity M, the quantity M includes a quantity of pieces of DCI that the terminal device requests to receive in the first span of the PDCCH in the first scenario mode, and the quantity M is a positive integer greater than 0 and less than the quantity N.

In a possible implementation, the processing unit is configured to determine, based on a scheduling situation of the network device, to send the DCI to the terminal device based on the second information or the first information. When the network device determines to send the DCI to the terminal device based on the second information, the communication unit is configured to send third information to the terminal device, where the third information notifies the network device to send the DCI to the terminal device based on the second information. The communication unit is configured to send the DCI to the terminal device through the PDCCH based on the second information, where the quantity of pieces of DCI in the first span is less than or equal to the quantity M.

In a possible implementation, when the network device determines to send the DCI to the terminal device based on the first information, the communication unit is configured to send fourth information to the terminal device, where the fourth information notifies the network device to send the DCI to the terminal device based on the first information. The communication unit is further configured to send the DCI to the terminal device through the PDCCH, where the quantity of pieces of DCI in the first span is less than or equal to the quantity N.

In a possible implementation, the second information is radio resource control RRC signaling, media access control MAC signaling, or assistance information.

In a possible implementation, in the first scenario mode, power consumption of the terminal device is less than a first value, or a ratio of a downlink slot to an uplink slot in the PDCCH is greater than a second value, or a delay requirement of data transmission of the terminal device is greater than a third value.

According to a fifth aspect, this application provides a communication apparatus. The communication apparatus includes a processor. When the processor invokes a computer program in a memory, the method according to the first aspect or the second aspect is performed.

According to a sixth aspect, this application provides a communication apparatus. The communication apparatus includes a processor and a memory. The memory is configured to store computer-executable instructions, and the processor is configured to execute the computer-executable instructions stored in the memory, to enable the communication apparatus to perform the method according to the first aspect or the second aspect.

According to a seventh aspect, this application provides a communication apparatus. The communication apparatus includes a processor, a memory, and a transceiver. The transceiver is configured to receive a signal or send a signal, the memory is configured to store program code, and the processor is configured to invoke the program code from the memory to perform the method according to the first aspect or the second aspect.

According to an eighth aspect, this application provides a communication apparatus. The communication apparatus includes a processor and an interface circuit. The interface circuit is configured to: receive code instructions and transmit the code instructions to the processor, and the processor runs the code instructions to perform the method according to the first aspect or the second aspect.

According to a ninth aspect, an embodiment of this application provides a system. The system includes the communication apparatus provided in the third aspect or the fourth aspect.

According to a tenth aspect, an embodiment of this application provides a computer-readable storage medium. The computer-readable storage medium is configured to store instructions. When the instructions are executed, the method according to the first aspect or the second aspect is implemented.

According to an eleventh aspect, an embodiment of this application provides a computer program or a computer program product, including code or instructions. When the code or the instructions are run on a computer, the computer is enabled to perform the method according to the first aspect or the second aspect.

According to a twelfth aspect, an embodiment of this application provides a circuit system. The circuit system includes a processor and an interface. The processor is configured to: invoke instructions from the interface and run the instructions. When executing the instructions, the processor implements the method according to the first aspect or the second aspect.

### BRIEF DESCRIPTION OF DRAWINGS

FIG. 1 is a schematic architectural diagram of a mobile communication system according to this application;
FIG. 2a is a schematic diagram of slot configuration in a time division multiplexing system according to this application;
FIG. 2b is a schematic structural diagram of a slot according to this application;
FIG. 3 is a schematic diagram of tasks of a terminal device in slots according to this application;
FIG. 4a is a schematic diagram of a task of processing DCI by a terminal device in one slot according to this application;
FIG. 4b is a schematic diagram of another task of processing DCI by a terminal device in one slot according to this application;
FIG. 4c is a schematic diagram of frequencies of frequency increase and voltage boost of a terminal device in different slot configuration ratios according to this application;
FIG. 5 is a schematic flowchart of a DCI sending method according to this application;
FIG. 6 is a schematic flowchart of another DCI sending method according to this application;
FIG. 7 is a schematic flowchart of still another DCI sending method according to this application;
FIG. 8 is a schematic diagram of a PDCCH carrying DCI according to this application;
FIG. 9 is a schematic flowchart of still another DCI sending method according to this application;
FIG. 10a is another schematic diagram of a PDCCH carrying DCI according to this application;
FIG. 10b is still another schematic diagram of a PDCCH carrying DCI according to this application;
FIG. 11 is a schematic structural diagram of a communication apparatus according to an embodiment of this application;
FIG. 12 is a schematic structural diagram of a communication apparatus according to an embodiment of this application;
FIG. 13 is a schematic block diagram of a terminal device according to an embodiment of this application; and
FIG. 14 is a schematic block diagram of a network device according to an embodiment of this application.

### DESCRIPTION OF EMBODIMENTS

To make the objectives, technical solutions, and advantages of this application clearer, the following further describes this application in detail with reference to the accompanying drawings.

In the specification, the claims, and the accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of operations or units is not limited to the listed operations or units, but optionally further includes an unlisted operation or unit, or optionally further includes another inherent operation or unit of the process, the method, the product, or the device.

An "embodiment" mentioned in this specification means that a particular feature, structure, or characteristic described with reference to this embodiment may be included in at least one embodiment of this application. The phrase shown in various positions in this specification may not necessarily refer to a same embodiment, and is not an independent or optional embodiment exclusive from another embodiment. It is explicitly and implicitly understood by persons skilled in the art that embodiments described in this specification may be combined with another embodiment.

In this application, "at least one (item)" means one or more, "a plurality of" means two or more, "at least two (items)" means two, three, or more, and "and/or" is used to describe a correspondence relationship between corresponding objects, and indicates that there may be three relationships. For example, "A and/or B" may indicate that only A exists, only B exists, and both A and B exist, where A and B may be singular or plural. The character "/" usually represents an "or" relationship between the corresponding objects. "At least one of the following items (pieces)" or a similar expression thereof refers to any combination of these items, including any combination of singular items (pieces) or plural items (pieces). For example, at least one (piece) of a, b, or c may indicate a, b, c, "a and b", "a and c", "b and c", or "a, b, and c", where a, b, and c may be singular or plural.

To better understand the solutions provided in this application, the following first describes a system architecture in this application.

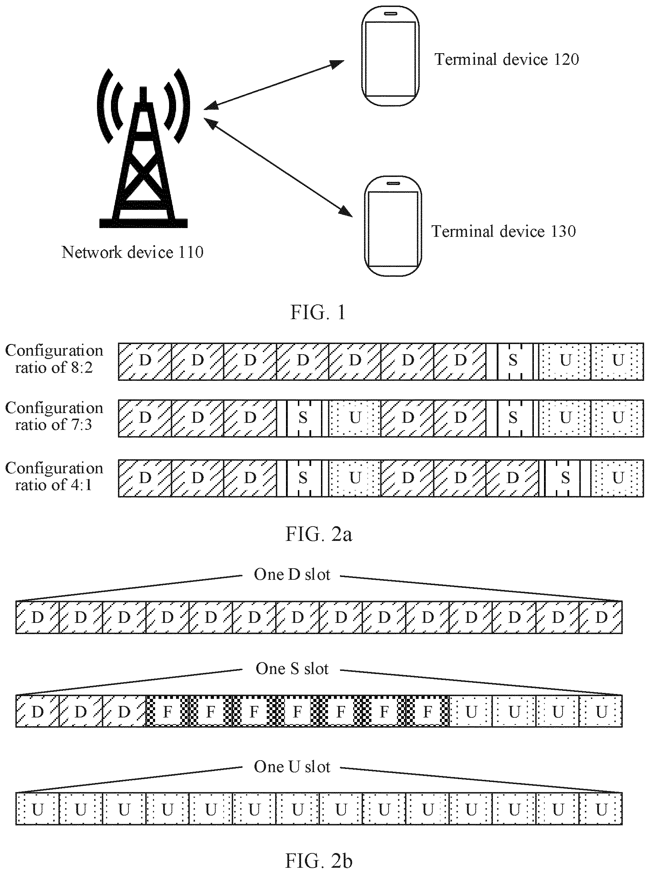

FIG. 1 is a schematic architectural diagram of a mobile communication system according to this application. As shown in FIG. 1, an architecture of the system includes a network device (namely, a network device 110 in FIG. 1) and terminal devices (namely, a terminal device 120 and a terminal device 130 in FIG. 1). It should be learned that the terminal device is connected to the network device in a wireless manner. FIG. 1 is only a schematic diagram. The communication system may further include another network device. For example, the communication system may further include a wireless relay device and a wireless backhaul device, which are not shown in FIG. 1. Quantities of network devices and terminal devices included in the mobile communication system are not limited in this embodiment of this application. The terminal device may be located at a fixed position, or may be mobile.

The following separately describes in detail the terminal device, an access network device, and a core network device in FIG. 1.

### 1. Terminal device

The terminal device may also be referred to as user equipment (user equipment, UE), and includes a device that provides a user with voice and/or data connectivity, for example, may include a handheld device with a wireless connection function, or a processing device connected to a wireless modem. The terminal device may communicate with a core network through a radio access network (radio access network, RAN), and exchange voice and/or data with the RAN. The terminal device may include a wireless terminal device, a mobile terminal device, a device-to-device (device-to-device, D2D) communication terminal device, a vehicle to everything (vehicle to everything, V2X) terminal device, a machine-to-machine/machine-type communication (machine-to-machine/machine-type communication, M2M/MTC) terminal device, an internet of things (internet of things, IoT) terminal device, a subscriber unit, a subscriber station, a mobile station, a remote station, an access point (access point, AP), a remote terminal, an access terminal, a user terminal, a user agent, user equipment, or the like. For example, the terminal device may include a mobile phone (or referred to as a "cellular" phone), a computer with a mobile terminal device, or a portable, pocket-sized, handheld, or computer built-in mobile apparatus. For example, the terminal device may be a device such as a personal communications service (personal communications service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may further include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

### 2. Network device

The network device mentioned in this application may be understood as a general term of the core network device and the access network device. The core network device and the access network device may be independent and different physical devices, or functions of the core network device and logical functions of the access network device may be integrated into a same physical device, or some of functions of the core network device and some of functions of the access network device may be integrated into one physical device.

The access network device is a node or a device that connects the terminal device to a wireless network. For example, the access network device includes but is not limited to a next generation NodeB (generation NodeB, gNB), an evolved NodeB (evolved NodeB, eNB), a next generation evolved NodeB (next generation eNB, ng-eNB), a wireless backhaul device, a home base station ((home evolved NodeB, HeNB) or (home NodeB, HNB)), a baseband unit (baseband unit, BBU), a transmission and reception point (transmission and reception point, TRP), a transmission point (transmission point, TP), and a mobile switching center in a 5G communication system.

For ease of understanding this application, the following explains and describes related technical features in embodiments of this application. It should be noted that these explanations are intended to make embodiments of this application easier to be understood, but should not be considered as a limitation on the protection scope claimed in this application.

### 1. Time domain structure

In a new radio (new radio, NR) standard, duration of a frame length for transmission is 10 ms, each frame is divided into 10 subframes, and each subframe is 1 ms. Each subframe is further divided into several slots, and each slot includes 14 orthogonal frequency division multiplexing (orthogonal frequency division multiplexing, OFDM) symbols (referred to as symbols for short below). A specific time length of each slot is determined by a parameter set. For example, when a subcarrier spacing (subcarrier spacing, SCS) is 15 kHz, one slot is 1 ms; or when a subcarrier spacing is 30 kHz, one slot is 0.5 ms.

NR supports a slot used for uplink transmission, where the slot is denoted as a U slot (slot). The NR supports a slot used for downlink transmission, where the slot is denoted as a D slot. The NR also supports a slot with both uplink and downlink configuration, where the slot is denoted as an S slot. All slots configured by a network device are D, S, and U slots. FIG. 2a is a schematic diagram of some typical slot configurations in a time division multiplexing (time division duplex, TDD) system. FIG. 2a includes a configuration ratio of 8:2 (to be specific, DDDDDDDSUU), a configuration ratio of 7:3 (to be specific, DDDSUDDSUU), a configuration ratio of 4:1 (to be specific, DDDSU), and the like.

FIG. 2b is a schematic diagram of symbols in each of the D slot, the S slot, and the U slot. As shown in FIG. 2b, a D slot merely includes downlink symbols (downlink symbols, D), and D is used only for downlink transmission and cannot be used for uplink transmission; an S slot includes U, D, and flexible symbols (flexible symbols, F), and F may be used for both downlink transmission and uplink transmission; a U slot merely includes uplink symbols (uplink symbols, U), and U is used only for uplink transmission and cannot be used for downlink transmission.

### 2. Downlink control information (downlink control information, DCI)

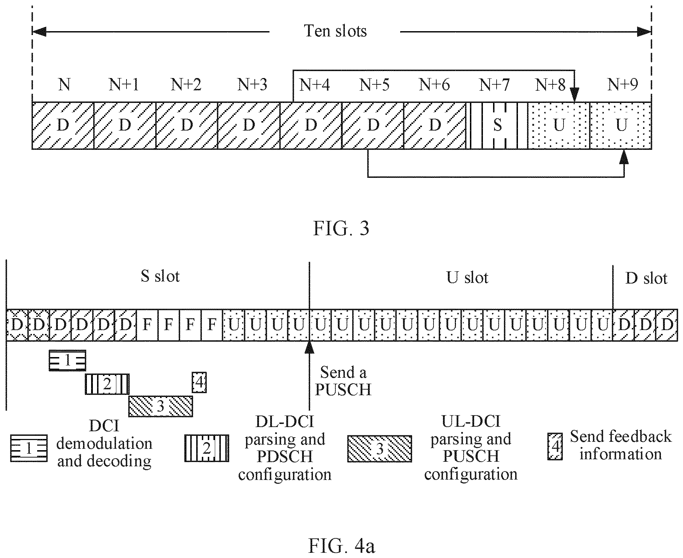

In an NR design, a physical downlink control channel (physical downlink control channel, PDCCH) carries the DCI for service transmission. According to different scheduling objects, the DCI may be classified into: DCI (denoted as UL-DCI) for uplink scheduling, where the UL-DCI is used to schedule a physical uplink channel, for example, schedule a physical uplink shared channel (physical uplink shared channel, PUSCH); and DCI (denoted as DL-DCI) for downlink scheduling, where the DL-DCI is used to schedule a physical downlink channel, for example, schedule a physical downlink shared channel (physical downlink shared channel, PDSCH). After completing receiving the PDSCH, the uplink needs to feed back acknowledge character (acknowledge character, ACK) information of the receiving or negative acknowledge character (negative acknowledge character, NACK) information of the receiving. For example, FIG. 3 is a schematic diagram of tasks of a terminal device in slots. The terminal device parses UL-DCI in a slot N+4, where the UL-DCI is used to schedule a slot N+8 to transmit a PUSCH (where it may be understood as that the terminal device transmits uplink data through the PUSCH in the slot N+8). The terminal device parses DL-DCI in a slot N+5, where the DL-DCI is used to schedule the slotN+5 to transmit a PDSCH (where it may be understood as that the terminal device receives downlink data through the PDSCH in the slot N+5). After completing receiving the PDSCH, the terminal device feeds back an ACK to a network device in a slot N+9.

### 3. Decoding time N₁ of the PDSCH and preparation time N₂ of the PUSCH

3.1. Table 1 is decoding time N₁ of the PDSCH in a PDSCH processing capability 1.

**Table 1**

| *µ* | Decoding time N₁ [symbol] of the PDSCH | |
|---|---|---|
| | In DMRS-Downlink configuration of a PDSCH mapping type A and a PDSCH mapping type B, dmrs-Additional Position='pos0' | In the DMRS-Downlink configuration of the PDSCH mapping type A and the PDSCH mapping type B, any dmrs-Additional Position≠'pos0' |
| 0 | 8 | N_{1,0} |
| 1 | 10 | 13 |
| 2 | 17 | 20 |
| 3 | 20 | 24 |

3.2. Table 2 is decoding time N₁ of the PDSCH in a PDSCH processing capability 2.

**Table 2**

| *µ* | Decoding time N₁ [symbol] of the PDSCH |
|---|---|
| | In DMRS-Downlink configuration of a PDSCH mapping type A, and in DMRS-Downlink configuration of a PDSCH mapping type B, dmrs-Additional Position='pos0' |
| 0 | 3 |
| 1 | 4.5 |
| 2 | 9 for frequency range 1 |

3.3. Table 3 is preparation time N₂ of the PUSCH in a PUSCH timing capability 1.

**Table 3**

| *µ* | Preparation time N₂ [symbol] of the PUSCH |
|---|---|
| 0 | 10 |
| 1 | 12 |
| 2 | 23 |
| 3 | 36 |

3.4. Table 4 is preparation time N₂ of the PUSCH in a PUSCH timing capability 2.

**Table 4**

| *µ* | Preparation time N₂ [symbol] of the PUSCH |
|---|---|
| 0 | 5 |
| 1 | 5.5 |
| 2 | 11 for frequency range 1 |

It may be understood as that N₁ is duration between a moment at which the terminal device receives the PDSCH and a moment at which the terminal device sends an ACK feedback. N₂ is duration between a moment at which the terminal device receives the DCI and a moment at which the terminal device sends the PUSCH to the network device. It can be learned that the decoding time N₁ of the PDSCH when the terminal device has the PDSCH processing capability 1 is greater than the decoding time N₁ of the PDSCH when the terminal device has the PDSCH processing capability 2. The preparation time N₂ of the PUSCH when the terminal device has the PUSCH timing capability 1 is greater than the preparation time N₂ when the terminal device has the PUSCH timing capability 2.

### 4. PDCCH monitor span (monitor span)

The PDCCH monitor span may be understood as a plurality of consecutive symbols in one slot (slot). It may be specified that two parameters (a parameter X and a parameter Y) are used to define one PDCCH monitor span. The parameter X indicates consecutive symbols occupied by the PDCCH monitor span, and the parameter Y indicates a quantity of first Y symbols that can be used to send the DCI in the consecutive symbols occupied by the PDCCH monitor span. For example, if a parameter X of a PDCCH monitor span is 7, and a parameter Y is 3, it indicates that the PDCCH monitor span occupies seven consecutive symbols: a symbol 0 to a symbol 6. DCI sent in the PDCCH monitor span may occupy a maximum of the first three consecutive symbols in the seven symbols of the PDCCH monitor span. To be specific, the DCI sent in the PDCCH monitor span may occupy the first three symbols: the symbol 0 to the symbol 2. It should be learned that one PDCCH monitor span includes a minimum of two symbols, and one slot includes 14 symbols. It can be learned that one slot may include a maximum of seven PDCCH monitor spans.

In some embodiments, it is specified in a capability item description of the terminal device that the terminal device needs to be capable of processing three pieces of valid (valid) DCI in each PDCCH monitor span. One slot may include a maximum of seven PDCCH monitor spans, and it can be inferred that one slot may include a maximum of 21 pieces of valid (valid) DCI, that is, support 21 pieces of valid DCI. In some embodiments, the DCI may be the valid DCI. In some embodiments, a quantity of pieces of DCI is a quantity of data packets of signaling transmitted through the PDCCH. In some embodiments, the valid DCI is DCI that can be parsed out by the UE.

It is found through practice that if the terminal device processes a plurality of pieces of valid DCI in one slot of the PDCCH, a quantity of tasks of the terminal device in the slot is large. For example, FIG. 4a is a schematic diagram of a task of processing two pieces of DCI by a terminal device in one slot. The terminal device receives the DCI on the first two symbols in an S slot. Further, the terminal device requires duration shown in a block 1 in FIG. 4a to demodulate and decode the DCI in the S slot, to obtain that the DCI on the two symbols is DL-DCI and LTL-DCI. The terminal device requires duration shown in a block 2 in FIG. 4a to parse the DL-DCI and configure a PDSCH (including a start symbol and a quantity of consecutive symbols for receiving the PDSCH by the terminal device) based on the DL-DCI. The terminal device requires duration shown in a block 3 in FIG. 4a to parse the UL-DCI and configure a PUSCH (including a start symbol and a quantity of consecutive symbols for sending the PUSCH by the terminal device) based on the UL-DCI. When completing receiving a PDCCH (it may be understood as that the terminal device completes parsing the UL-DCI and configuring the PUSCH based on the UL-DCI), the terminal device feeds back, to a network device, feedback information indicating whether the PDCCH is successfully received. It may be understood as that, the terminal device requires duration shown in a block 4 in FIG. 4a to feed back ACK information to the network device when the terminal device successfully receives the PDCCH, or feed back NACK information to the network device when the terminal device fails to receive the PDCCH.

It should be learned that, it is specified in a communication protocol that the terminal device needs to have a capability of "sending the PUSCH immediately at an interval of 12 symbols from the last symbol carrying the DCI". It can be learned that when the terminal device receives a large quantity of pieces of DCI in one slot, the terminal device needs to consume more duration to parse the DCI and respond to configuration of the DCI. If the duration for parsing the DCI and responding to the configuration of the DCI exceeds 12 symbols, the terminal device cannot have the capability of "sending the PUSCH immediately at an interval of 12 symbols from the last symbol carrying the DCI", and this does not comply with the specification in the protocol.

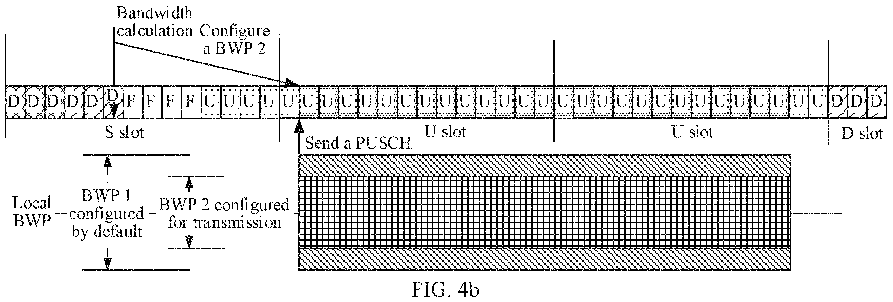

In addition, the terminal device may fail to parse the DCI, and power consumption of the terminal device may increase after the terminal device fails to parse the DCI. Refer to FIG. 4b. In an application scenario, a network device configures a default bandwidth (namely, a BWP 1 configured by default in FIG. 4b) for a terminal device. In this scenario, if a bandwidth required by the terminal device for data transmission in an actual service is small (where the bandwidth may be understood as being less than the BWP 1), the network device configures, for the terminal device by using DCI, a bandwidth (namely, a bandwidth BWP 2 configured for transmission in FIG. 4b) that can be scheduled during actual transmission of the terminal device. However, because the terminal device receives three pieces of DCI in an S slot of a PDCCH, a quantity of tasks of the terminal device in the S slot is large. Further, when sending a PUSCH, the terminal device does not calculate, based on the DCI, the bandwidth BWP 2 configured by the network device for actual transmission of the terminal device. In this case, the terminal device can only send the PUSCH based on the default BWP 1 configured by the network device for the terminal device. Consequently, power consumption of the terminal device increases.

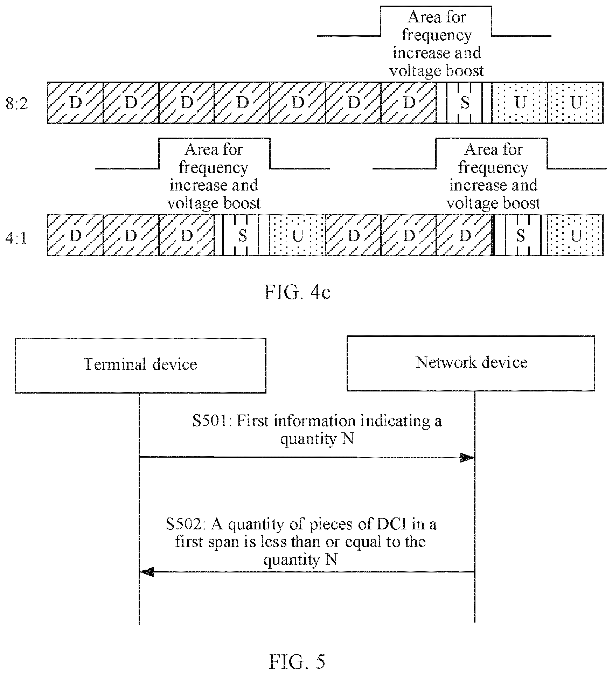

In another application scenario, the terminal device parses a plurality of pieces of DCI in one slot, causing an increase in load in the slot, and the terminal device performs blind detection on the DCI. It may be understood as that the terminal device cannot determine a quantity of pieces of DCI configured by the network device in which slot. In this case, the terminal device needs to perform voltage boost and frequency increase on a service core of the terminal device in each slot in which a plurality of pieces of DCI may be configured, so that when detecting the plurality of pieces of DCI in the slot, the terminal device can have a capability of parsing the plurality of pieces of DCI. FIG. 4c shows frequencies of frequency increase and voltage boost of a terminal device in different slot configuration ratios. It can be learned from FIG. 4c that, in two slot configuration ratios, a frequency of frequency increase and voltage boost in a slot configuration ratio of 4:1 (which may be understood as one U slot in five slots) is higher than a frequency of frequency increase and voltage boost in a slot configuration ratio of 8:2 (which may be understood as two consecutive U slots in ten slots). That is, when a small quantity of consecutive U slots are configured in the slots, power consumption of the terminal device also increases.

It can be learned that if a DCI sending method cannot match an actual requirement of the terminal device, power consumption of the terminal device may increase. Therefore, this application provides a DCI sending method, to improve flexibility of receiving DCI by a terminal device, and improve adaptation between the terminal device and a quantity of pieces of received DCI. In this way, data transmission performance of the terminal device is ensured, and power consumption of the terminal device is reduced.

The following describes in detail the DCI sending method provided in this application.

FIG. 5 is a schematic flowchart of a DCI sending method according to this application. As shown in FIG. 5, the DCI sending method includes S501 and S502. The method shown in FIG. 5 may be performed by a terminal device, a chip or a chip system of the terminal device. In FIG. 5, an example in which the method is performed by the terminal device is used for description.

S501: The terminal device sends first information to a network device, where the first information indicates a quantity N. The quantity N includes a quantity of pieces of DCI that the terminal device supports to receive in a first span of a PDCCH. The quantity N is a positive integer greater than 0.

In other words, the terminal device actively sends the first information to the network device, to notify the network device of a maximum quantity of pieces of DCI that the terminal device supports to receive in the first span of the PDCCH, so that the network device can send the DCI to the terminal device based on the first information. The first information may be a physical layer parameter. Specifically, the first information may indicate the quantity N in the following two forms.

### Form 1: Direct indication

To be specific, the first information may directly indicate the quantity of pieces of DCI that the terminal device supports to receive in the first span of the PDCCH. For example, if a value of a message field indicating the quantity N in the first information is 3, it may be considered that the first information directly indicates that the quantity of pieces of DCI that the terminal device supports to receive in the first span of the PDCCH is 3.

### Form 2: Indirect indication

To be specific, the first information does not directly carry a value of the quantity N, but indicates the value of the quantity N by using a mapping relationship (or correspondence). For example, Table 5 is a correspondence between the quantity N and content information of a message field indicating the quantity N. If the information of the message field indicating the quantity N in the first information is a mode a, it can be learned from Table 5 that the quantity N is 1. In other words, it may be considered as that the first information directly indicates that the quantity of pieces of DCI that the terminal device supports to receive in the first span of the PDCCH is 1.

**Table 5**

| Content information of the message field | Quantity N |
|---|---|
| Mode a | 1 |
| Mode b | 2 |
| Mode c | 3 |

It should be noted that the first span may be a D slot or an S slot, or may be a PDCCH monitor span. The following specifically discusses the first span in two cases.

Case 1: The first span is the D slot or the S slot. In this case, the terminal device may send the first information to the network device, to indicate a maximum quantity of pieces of DCI that the terminal device supports to receive in the D slot or the S slot, to ensure that a quantity of tasks of the terminal device in the D slot or the S slot meets a requirement of the terminal device. For example, if the terminal device expects that a quantity of pieces of DCI received by the terminal device in one S slot is less than or equal to 7, the terminal device sends the first information to the network device, where the first information indicates that the quantity of pieces of DCI that the terminal device supports to receive in one S slot is 7.

It should be learned that the maximum quantity of pieces of DCI that the terminal device supports to receive in the D slot may be different from the maximum quantity of pieces of DCI that the terminal device supports to receive in the S slot. For example, the first information may carry two different quantities: a quantity N11 and a quantity N12. The quantity N11 is a quantity of pieces of DCI that the terminal device supports to receive in the D slot, and the quantity N12 is a quantity of pieces of DCI that the terminal device supports to receive in the S slot.

Case 2: The first span is the PDCCH monitor span. In this case, it may be understood as that the terminal device determines, at a granularity (the PDCCH monitor span) smaller than the slot, a quantity of pieces of DCI that the terminal device supports to receive. In this way, it can be ensured that a quantity of tasks of the terminal device in the D slot or the S slot meets a requirement of the terminal device, and the DCI can be evenly distributed in the slot. For example, if the terminal device expects that a quantity of pieces of DCI received by the terminal device in one PDCCH monitor span is less than or equal to 1, the terminal device sends the first information to the network device, where the first information indicates that a maximum quantity of pieces of DCI that the terminal device supports to receive in one PDCCH monitor span is 1. In this case, if one S slot includes seven PDCCH monitor spans, a maximum quantity of pieces of DCI that can be received in the S slot is 7. It can be learned that, in this case, not only the quantity of tasks of the terminal device in the S slot can be ensured to meet the requirement (which is that a quantity of pieces of DCI received in one S slot is less than or equal to 7) of the terminal device, but also the DCI in the S slot can be evenly distributed in the PDCCH monitor span of the S slot.

Based on this, it should be further noted that terminal devices mentioned in this application may be all terminal devices in a serving cell (Cell) corresponding to a network device, or may be some terminal devices in the serving cell corresponding to the network device.

In a case, terminal devices that send the first information to the network device are all terminal devices in the serving cell corresponding to the network device. In this case, when a terminal device resides in the cell corresponding to the network device, the terminal device needs to report the first information to the network device, to notify the network device of a maximum quantity of pieces of DCI that the terminal device supports to receive in the first span. In another case, terminal devices that send the first information to the network device are some terminal devices in the serving cell corresponding to the network device, for example, a terminal device with a reduced capability (reduced capability, RedCap) and an NR device that needs to reduce power consumption. In this case, not all terminal devices residing in the cell corresponding to the network device need to report the first information to the network device. A terminal device may determine, based on a requirement of the terminal device, whether to report the first information to the network device. For example, when a terminal device detects that the terminal device has an insufficient capability of parsing DCI in the first span, and expects that a quantity of pieces of DCI configured by the network device in the first span is less than or equal to an expected value N, the terminal device sends the first information to the network device; otherwise, the terminal device does not send the first information to the network device, to save communication transmission resources.

In a possible implementation, the terminal device determines the quantity N based on a performance requirement of the terminal device. The performance requirement includes one or more of power consumption information, terminal device type information, or transmission performance information. The power consumption information is current power consumption requirement information and the like of the terminal device. The terminal device type information indicates that the terminal device is an internet of things terminal, a RedCap terminal, a mobile device, or the like. The transmission performance information is a delay requirement, a transmission speed requirement, or the like of current data transmission of the terminal device.

In an example, UE 1 is a terminal device that needs to remain in a standby state for a long time, and power consumption set in power consumption information of the UE 1 cannot be greater than P. If the UE 1 receives more than six pieces of DCI in one S slot of the PDCCH, power consumption of the UE 1 in the S slot is greater than P. In this case, the UE 1 sends the first information to the network device, where the first information indicates that the UE 1 can receive a maximum of six pieces of DCI in the S slot of the PDCCH.

In another example, a terminal device type of UE 2 is a RedCap terminal, and the UE 2 has a capability of receiving or parsing only five pieces of DCI in one slot. In this case, the UE 2 sends the first information to the network device, where the first information indicates that the UE 2 can receive a maximum of five pieces of DCI in the D slot or the S slot of the PDCCH.

In still another example, UE 3 is a music playing device, and the UE 3 has a low delay requirement of data transmission (in other words, a low requirement on real-time performance of data transmission). In this case, the UE 3 sends the first information to the network device to reduce power consumption, where the first information indicates that the UE 3 can receive a maximum of five pieces of DCI in the D slot of the PDCCH, and can receive a maximum of four pieces of DCI in the S slot of the PDCCH.

S502: The terminal device receives the DCI on the PDCCH, where the quantity of pieces of DCI in the first span is less than or equal to the quantity N.

After receiving the first information sent by the terminal device through S501, the network device sends the DCI to the terminal device through the PDCCH based on the quantity N indicated in the first information. The quantity of pieces of DCI in the first span is less than or equal to the quantity N. The description of "less than or equal to" includes: The quantity of pieces of DCI in the first span is less than the quantity N; and the quantity of pieces of DCI in the first span is less than the quantity N. It should be noted that "less than or equal to" in this application may be understood as including "less than or equal to" and "less than". Unless otherwise specified, this is true in this specification.

For example, the first information indicates that the quantity of pieces of DCI that the terminal device supports to receive in the S slot of the PDCCH is 2. In this case, the network device sends the DCI to the terminal device through the PDCCH, and the quantity of pieces of DCI received by the terminal device in the S slot may be 0, 1, or 2.

According to this DCI sending method, the terminal device reports, to the network device based on a status of the terminal device, the quantity N of pieces of DCI that the terminal device supports to receive in the first span, so that the network device sends the DCI to the terminal device based on the quantity N, to improve flexibility of DCI sending and meet a requirement of each terminal device.

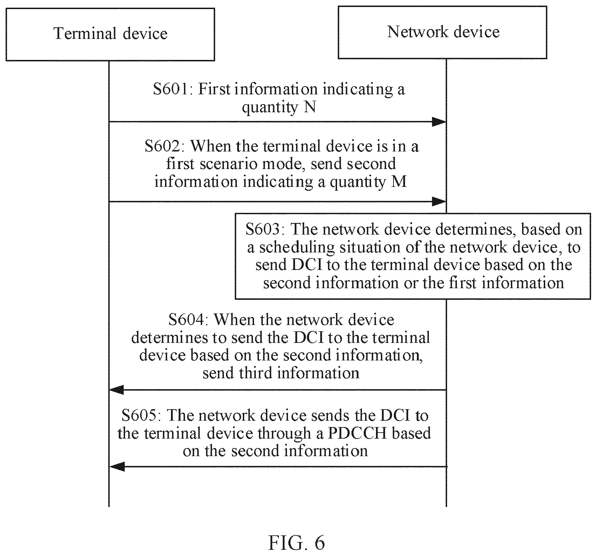

FIG. 6 is a schematic flowchart of another DCI sending method according to this application. As shown in FIG. 6, the DCI sending method includes S601 to S605. The method shown in FIG. 6 may be performed by a terminal device and a network device, or a chip (or a chip system) of the terminal device and a chip (or a chip system) of the network device. In FIG. 6, an example in which the method is performed by the terminal device and the network device is used for description.

S601: The terminal device sends first information to the network device, where the first information indicates a quantity N. The quantity N includes a quantity of pieces of DCI that the terminal device supports to receive in a first span of a PDCCH.

For a specific implementation of S601, refer to the descriptions of the specific implementation of S501. Details are not described herein again.

S602: When the terminal device is in a first scenario mode, the terminal device sends second information to the network device, where the second information indicates a quantity M. The quantity M includes a quantity of pieces of DCI that the terminal device requests to receive in the first span of the PDCCH in the first scenario mode, and the quantity M is a positive integer greater than 0 and less than the quantity N.

In other words, after the terminal device sends, to the network device, a maximum quantity (the quantity N) of pieces of DCI that the terminal device supports to receive in the first span, if the terminal device detects that the terminal device is in the first scenario mode, the terminal device sends the second information to the network device, where the second information indicates that in the first scenario mode, the terminal device expects that a quantity of pieces of DCI sent by the network device in the first span can be less than the quantity M, and the quantity M is less than the quantity N in the first information. The second information is radio resource control (radio resource control, RRC) signaling, media access control (media access control, MAC) signaling, or assistance (Assistance) information.

It should be noted that the terminal device in the first scenario mode includes but is not limited to one or more of the following features: 1. Power consumption of the terminal device is less than a first value. 2. A ratio of a downlink slot to an uplink slot in the PDCCH received by the terminal device is greater than a second value. 3. A delay requirement of data transmission of the terminal device is greater than a third value. 4. A temperature of the terminal device is greater than a fourth value. The first value, the second value, the third value, and the fourth value are all preset values based on an actual application scenario of the terminal device, and may be subsequently adjusted. This is not specifically limited herein.

In an application scenario, the terminal device has two states after being started: a first state and a second state. It may be understood that when the terminal device is in the first state, power consumption is high (where power consumption of the terminal device in the first state is greater than or equal to the first value), and when the terminal device is in the second state, power consumption is low (where power consumption of the terminal device in the second state is less than the first value). In this application scenario, the first scenario mode is that the terminal device is in the second state. If the terminal device detects that the terminal device is switched from the first state to the second state, or the terminal device detects that the terminal device is in the second state, or the terminal device detects that power consumption of the terminal device is less than the first value, the terminal device sends the second information to the network device, to request the network device to reduce the quantity of pieces of DCI sent in the first span of the PDCCH, to reduce power consumption of the terminal device and save communication transmission resources.

In another application scenario, a D slot can be used only for downlink transmission, and an S slot can be used for both uplink transmission and downlink transmission. Therefore, if there is a large quantity of pieces of DCI in the S slot, a quantity of tasks of the terminal device in the S slot is large. Consequently, power consumption of the terminal device in the S slot increases. Slots configured by the network device in the PDCCH are sequentially: at least one D slot, one S slot, and at least one U slot. It may be similarly understood as that when a quantity of D slots in the slot configuration in the PDCCH is far greater than a quantity of U slots, the network device may have enough D slots for DCI sending. When the quantity of D slots in the slot configuration in the PDCCH is small, a plurality of pieces of DCI also need to be configured in the S slot to meet a requirement of uplink and downlink service scheduling performed by the network device on the terminal device. Therefore, in this application scenario, a ratio of the U slot to the D slot in the PDCCH received by the terminal device in the first scenario mode is greater than the second value. If the terminal device detects that the ratio of the U slot to the D slot in the PDCCH is greater than the second value, the terminal device sends the second information to the network device, to request a quantity of pieces of DCI sent by the network device in the S slot of the PDCCH to be less than or equal to the quantity M, to reduce power consumption of the terminal device in the S slot.

In still another application scenario, modes after a vehicle-mounted terminal device is started include a docked standby mode and a real-time driving mode. When the vehicle-mounted terminal device is in the real-time driving mode, the vehicle-mounted terminal needs to perform real-time interaction transmission of road condition data with the network device, automatically plan route navigation, and the like. It may be understood as that when the vehicle-mounted terminal device is in the real-time driving mode, the vehicle-mounted terminal device sets a delay requirement of data transmission to be less than or equal to the third value, to improve real-time performance of data transmission. However, when the vehicle-mounted terminal device is in the docked standby mode, data exchanged between the vehicle-mounted terminal device and the network device is reduced. It may be understood as that when the vehicle-mounted terminal device is in the docked standby mode, the vehicle-mounted terminal device relaxes a delay requirement of data transmission, and the delay requirement of the vehicle-mounted terminal device may be greater than the third value. In this scenario, the first scenario mode is that the vehicle-mounted terminal device is in the docked standby mode. If the vehicle-mounted terminal device detects that the vehicle-mounted terminal device is switched from the real-time driving mode to the docked standby mode, or the vehicle-mounted terminal device detects that the vehicle-mounted terminal device is in the docked standby mode, or the vehicle-mounted terminal device detects that the delay requirement of data transmission is greater than the third value, the vehicle-mounted terminal device sends the second information to the network device, to request the network device to reduce the quantity of pieces of DCI sent in the first span of the PDCCH, to reduce power consumption of the vehicle-mounted terminal device.

In still another application scenario, a temperature of the terminal device in the first scenario mode is greater than the fourth value. In this scenario, if the terminal device detects that the temperature of the terminal device is greater than the fourth value by using a temperature sensor, the terminal device sends the second information to the network device, to request the quantity of pieces of DCI sent by the network device in the first span of the PDCCH to be less than or equal to the quantity M, to reduce power consumption of the terminal device and reduce the temperature of the terminal device.

It can be learned that, when the terminal device is in the first scenario mode, compared with a manner in which the network device sends the DCI to the terminal device based on the first information (or the quantity N), a manner in which the network device sends the DCI to the terminal device based on the second information (or the quantity M) better meets the requirement of the terminal device, and further reduces power consumption of the terminal device. Approximately, the quantity N in the first information may be used as a maximum quantity of pieces of DCI that can be supported by the terminal device in the first span, and the quantity M in the second information may be used as a quantity of pieces of DCI that is customized by the terminal device in the first span in the first scenario mode. This is more suitable for a current actual scenario mode of the terminal device.

S603: The network device determines, based on a scheduling situation of the network device, to send the DCI to the terminal device based on the second information or the first information.

In other words, there are a plurality of terminal devices in a serving cell corresponding to the network device. After the network device receives the second information sent by one of the plurality of terminal devices, the network device determines, based on the situation of scheduling all the terminal devices in the serving cell by the network device, to send the DCI to the terminal device based on the second information or the first information.

For example, the network device receives RRC signaling reported by UE 1 in the first scenario mode, where the RRC signaling indicates that the UE 1 expects that a quantity of pieces of DCI sent by the network device in the S slot is less than 2. After receiving the second information reported by the UE 1, the network device determines, based on the scheduling situation of the network device (where for example, if the UE 1 needs to upload a large quantity of pieces of data through a PUSCH, the network device needs to send a large quantity of pieces of DCI to the UE 1), that a quantity of pieces of DCI that cannot be sent in the S slot is less than 2. In this case, the network device determines that the DCI cannot be sent to the terminal device based on the second information, and the network device sends the DCI to the terminal device based on the first information.

S604: When the network device determines to send the DCI to the terminal device based on the second information, the network device sends third information to the terminal device, where the third information notifies the network device to send the DCI to the terminal device based on the second information.

In other words, the third information notifies the terminal device that the quantity of pieces of DCI in the first span of the PDCCH is less than or equal to the quantity M. For example, after receiving the second information sent by the terminal device, the network device determines to send the DCI to the terminal device based on the second information. In this case, the network device sends ACK information (namely, the third information) to the terminal device, to notify the terminal device that the DCI is to be sent based on the second information, and the quantity of pieces of DCI received by the terminal device in the first span of the PDCCH is less than or equal to the quantity M.

S605: The network device sends the DCI to the terminal device through the PDCCH based on the second information, where the quantity of pieces of DCI in the first span is less than or equal to the quantity M.

For example, if the second information indicates that the quantity of pieces of DCI that the terminal device requests to receive in the first span of the PDCCH is 2, the network device sends the DCI to the terminal device through the PDCCH, and a quantity of pieces of DCI received by the terminal device in the S slot may be 0, 1, or 2.

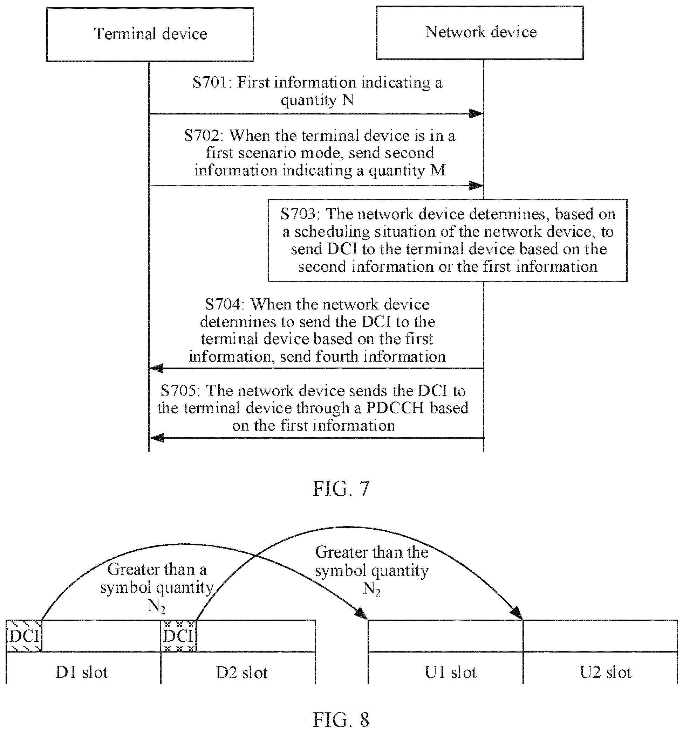

After receiving the second information sent by the terminal device, if the network device determines that the DCI cannot be sent to the terminal device based on the second information, the DCI can be sent to the terminal device only based on the first information. In this case, a DCI sending procedure is shown in FIG. 7. FIG. 7 is a schematic flowchart of still another DCI sending method according to this application. As shown in FIG. 7, the DCI sending method includes S701 to S705. The method shown in FIG. 7 may be performed by a terminal device and a network device, or a chip (or a chip system) of the terminal device and a chip (or a chip system) of the network device. In FIG. 7, an example in which the method is performed by the terminal device and the network device is used for description.

S701: The terminal device sends first information to the network device, where the first information indicates a quantity N. The quantity N includes a quantity of pieces of DCI that the terminal device supports to receive in a first span of a PDCCH.

S702: When the terminal device is in a first scenario mode, the terminal device sends second information to the network device, where the second information indicates a quantity M. The quantity M includes a quantity of pieces of DCI that the terminal device requests to receive in the first span of the PDCCH in the first scenario mode, and the quantity M is a positive integer greater than 0 and less than the quantity N.

S703: The network device determines, based on a scheduling situation of the network device, to send the DCI to the terminal device based on the second information or the first information.

For specific implementations of S701 to S703, refer to the descriptions of the specific implementations of S601 to S603. Details are not described herein again.

S704: When the network device determines to send the DCI to the terminal device based on the first information, the network device sends fourth information to the terminal device, where the fourth information notifies the network device to send the DCI to the terminal device based on the first information.

In other words, the third information notifies the terminal device that the quantity of pieces of DCI in the first span of the PDCCH is less than or equal to the quantity N. For example, after receiving the second information sent by the terminal device, the network device determines that the DCI cannot be sent to the terminal device based on the second information. In this case, the network device sends NACK information (namely, the fourth information) to the terminal device, to notify the terminal device that the quantity of pieces of DCI in the first span of the PDCCH is less than or equal to the quantity N.

It should be noted that, it is pointed out in S602 that the second information may be signaling (RRC signaling or MAC signaling) or assistance information. When the second information is the signaling (the RRC signaling or the MAC signaling), if the network device determines not to send the DCI to the terminal device based on the second information, the network device should send the fourth information (for example, the NACK information) to the terminal device. When the second information is the assistance information, if the network device determines not to send the DCI to the terminal device based on the second information, the network device may send the fourth information (for example, the NACK information) to the terminal device, or may not send the fourth information to the terminal device. In this case, it may be understood as that if the terminal device does not receive third information (for example, NAC information) sent by the network device within specific duration, the terminal device considers, by default, that the network device sends the DCI based on the first information.

S705: The network device sends the DCI to the terminal device through the PDCCH based on the first information, where the quantity of pieces of DCI in the first span is less than or equal to the quantity N.

For example, the first information indicates that a quantity of pieces of DCI that the terminal device supports to receive in an S slot of the PDCCH is 3. In this case, the network device sends the DCI to the terminal device through the PDCCH, and a quantity of pieces of DCI received by the terminal device in the S slot may be 1, 2, or 3.

Based on the DCI sending methods described in FIG. 6 and FIG. 7, the terminal device requests the quantity M of pieces of received DCI in the first span from the network device based on an actual application scenario mode, so that the network device can send the DCI to the terminal device more flexibly. This is more suitable for an application scenario of the terminal device.

In still another application scenario, it is specified in a communication protocol that in a slot of a PDCCH, a symbol interval between the last symbol carrying UL-DCI and the first symbol for sending a PUSCH configured (or referred to as scheduled) by using the UL-DCI is greater than N₂ symbols, and the N₂ symbols are the preparation time N₂ of the PUSCH in the foregoing Table 3 or Table 4. As shown in FIG. 8, two pieces of DCI are carried in a D slot in a PDCCH, UL-DCI used to schedule a PUSCH in a U1 slot is carried in a D1 slot, and UL-DCI used to schedule a PUSCH in a U2 slot is carried in a D2 slot. In this case, in FIG. 8, a symbol interval between the last symbol of the UL-DCI in the D1 slot and the first symbol in the U1 slot is greater than N₂ symbols, and a symbol interval between the last symbol of the UL-DCI in the D2 slot and the first symbol in the U2 slot is greater than N₂ symbols.

However, it can be learned from the foregoing descriptions that after DCI is received in a slot carrying the DCI in a PDCCH, enough time is required to parse the DCI, and a PDSCH or a PUSCH is configured based on the DCI. During consecutive PUSCH invoking, if a terminal device does not have enough time to parse the DCI or configure the PDSCH or the PUSCH based on the DCI, a quantity of tasks of the terminal device in the slot may be excessively large, and this increases power consumption of the terminal device.

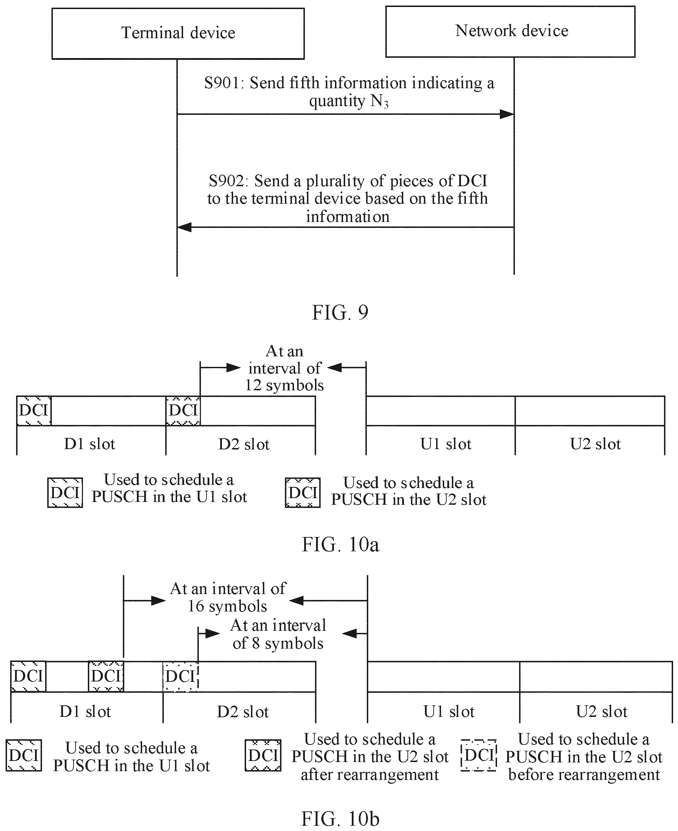

Based on this, FIG. 9 is a schematic flowchart of still another DCI sending method according to this application. As shown in FIG. 9, the DCI sending method includes S901 and S902. The method shown in FIG. 9 may be performed by a terminal device and a network device, or a chip (or a chip system) of the terminal device and a chip (or a chip system) of the network device. In FIG. 9, an example in which the method is performed by the terminal device and the network device is used for description.

S901: The terminal device sends fifth information to the network device, where the fifth information indicates that a symbol interval between the first symbol for consecutive PUSCH sending and the last DCI symbol in a plurality of pieces of DCI in a PDCCH is greater than or equal to a symbol quantity N₃, and the plurality of pieces of DCI in the PDCCH are used to configure the consecutive PUSCH sending.

The consecutive PUSCH sending may be understood as that a plurality of pieces of DCI are carried in the PDCCH, and in all DCI configuration, it is configured that U slots in which the sent PUSCH is located are consecutive or a same U slot. For example, as shown in FIG. 8, two pieces of DCI are carried in the D slot of the PDCCH. The UL-DCI used to schedule the PUSCH in the U1 slot is carried in the D1 slot, and the UL-DCI used to schedule the PUSCH in the U2 slot is carried in the D2 slot. The U1 slot and the U2 slot are consecutive (where the last symbol of the U1 slot is adjacent to the first symbol of the U2 slot). In this case, PUSCH sending this time may be understood as consecutive PUSCH sending.

In a possible implementation, the terminal device determines the symbol quantity N₃ based on a load status of a processor of the terminal device. N₃ is a positive integer greater than 0.

For example, a power threshold preset by the terminal device is P1. The terminal device determines, based on the load status of the processor of the terminal device, that when the symbol interval between the first symbol for the consecutive PUSCH sending and the last DCI symbol in the plurality of pieces of DCI in the PDCCH is less than 10 symbols, an actual load power of the terminal device is greater than the power threshold P1. In this case, to reduce power consumption of the terminal device, the terminal device sends the fifth information to the network device, where the fifth information indicates that the symbol interval between the first symbol for the consecutive PUSCH sending and the last DCI symbol in the plurality of pieces of DCI in the PDCCH is greater than or equal to 10 symbols.

S902: After receiving the fifth information, the network device sends the plurality of pieces of DCI to the terminal device based on the fifth information.

After receiving the fifth information, the network device sends the plurality of pieces of DCI to the terminal device. The plurality of pieces of DCI are used to configure the consecutive PUSCH sending, and the symbol interval between the last DCI symbol in the plurality of pieces of DCI and the first symbol for the consecutive PUSCH sending is greater than or equal to N₃.

For example, as shown in FIG. 10a, two pieces of DCI are carried in two D slots of a PDCCH initially configured by a network device. UL-DCI used to schedule a PUSCH in a U1 slot is carried in a D1 slot, and UL-DCI used to schedule a PUSCH in a U2 slot is carried in a D2 slot. Fifth information indicates that N₃ is 10. In a case, if a symbol interval between the last DCI symbol (namely, the foregoing last DCI symbol in the plurality of pieces of DCI) in the D2 slot and the first symbol (namely, the foregoing first symbol for the consecutive PUSCH sending) for transmitting the PUSCH in the U1 slot is twelve symbols (where a quantity is greater than N₃), the network device sends the DCI to a terminal device based on the initial configuration shown in FIG. 10a. To be specific, the UL-DCI used to schedule the PUSCH in the U1 slot is carried in the D1 slot, and the UL-DCI used to schedule the PUSCH in the U2 slot is carried in the D2 slot.

In another case, if a symbol interval between the last DCI symbol (namely, the foregoing last DCI symbol in the plurality of pieces of DCI) in the D2 slot and the first symbol (namely, the foregoing first symbol for the consecutive PUSCH sending) for transmitting the PUSCH in the U1 slot is eight symbols (where a quantity is less than N₃), the network device needs to rearrange, in the PDCCH, the two pieces of DCI used to configure the consecutive PUSCH sending in FIG. 10a. Two pieces of rearranged DCI are shown in FIG. 10b. The UL-DCI used to schedule the PUSCH in the U1 slot is carried in the D1 slot, the UL-DCI used to schedule the PUSCH in the U2 slot is carried in the D1 slot, and an interval between the last symbol of the UL-DCI used to schedule the PUSCH in the U2 slot and the first symbol for sending the PUSCH in the U1 slot is 16 symbols (where a quantity is greater than N₃).

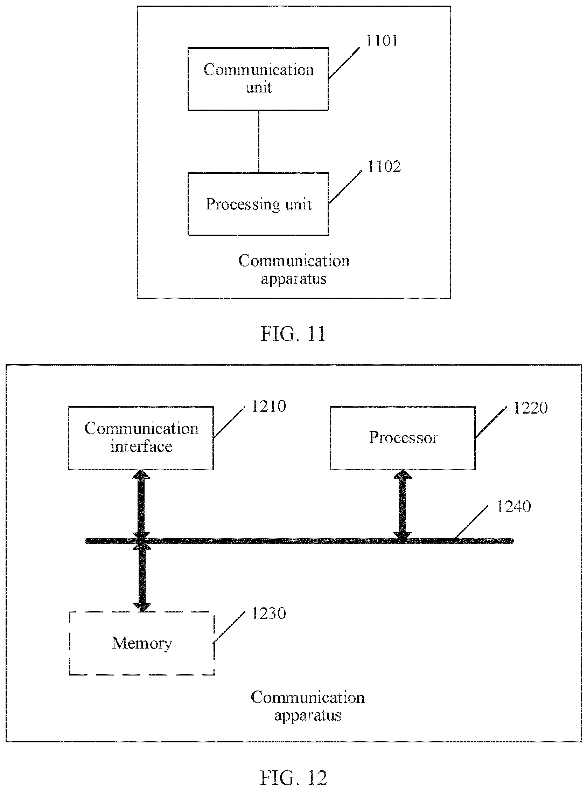

FIG. 11 is a schematic diagram of a structure of a communication apparatus according to an embodiment of this application. The communication apparatus shown in FIG. 11 may be configured to perform some or all functions of the terminal device in the method embodiments described in FIG. 5, FIG. 6, FIG. 7, or FIG. 9. The apparatus may be the terminal device, an apparatus in the terminal device, or an apparatus that can be used together with the terminal device. The communication apparatus may alternatively be a chip system. The communication apparatus shown in FIG. 11 may include a communication unit 1101 and a processing unit 1102. The communication unit 1101 is configured to: send first information to a network device, where the first information indicates a quantity N, and the quantity N includes a quantity of pieces of DCI that the terminal device supports to receive in a first span of a physical downlink control channel PDCCH; and receive the DCI on the PDCCH, where the quantity of pieces of DCI in the first span is less than or equal to the quantity N.

In a possible implementation, the processing unit 1102 is configured to determine the quantity N based on performance requirement information of the terminal device. The performance requirement information includes one or more of power consumption information, terminal type information, or transmission performance information.

In a possible implementation, when the terminal device is in a first scenario mode, the communication unit 1101 is configured to send second information to the network device, where the second information indicates a quantity M, the quantity M includes a quantity of pieces of DCI that the terminal device requests to receive in the first span of the PDCCH in the first scenario mode, and the quantity M is a positive integer greater than 0 and less than the quantity N.

In a possible implementation, the communication unit 1101 is configured to receive third information from the network device. The third information notifies the network device to send the PDCCH to the terminal device based on the second information.

In a possible implementation, the communication unit 1101 is configured to receive fourth information from the network device. The fourth information notifies the network device to send the PDCCH to the terminal device based on the first information.

In a possible implementation, the second information is radio resource control RRC signaling, media access control MAC signaling, or assistance information.

In a possible implementation, in the first scenario mode, power consumption of the terminal device is less than a first value, or a ratio of a downlink slot to an uplink slot in the PDCCH is greater than a second value, or a delay requirement of data transmission of the terminal device is greater than a third value.

FIG. 11 is a schematic diagram of a structure of a communication apparatus according to an embodiment of this application. The communication apparatus shown in FIG. 11 may be configured to perform some or all functions of the network device in the method embodiments described in FIG. 5, FIG. 6, FIG. 7, or FIG. 9. The apparatus may be the network device, an apparatus in the network device, or an apparatus that can be used together with the network device. The communication apparatus may alternatively be a chip system. The communication apparatus shown in FIG. 11 may include a communication unit 1101 and a processing unit 1102. The communication unit 1101 is configured to: receive first information from a terminal device, where the first information indicates a quantity N, and the quantity N includes a quantity of pieces of DCI that the terminal device supports to receive in a first span of a physical downlink control channel PDCCH; and send the DCI to the terminal device, where a valid quantity of pieces of DCI in the first span is less than or equal to the quantity N.

In a possible implementation, when the terminal device is in a first scenario mode, the communication unit 1101 is configured to receive second information from the terminal device, where the second information indicates a quantity M, the quantity M includes a quantity of pieces of DCI that the terminal device requests to receive in the first span of the PDCCH in the first scenario mode, and the quantity M is a positive integer greater than 0 and less than the quantity N.

In a possible implementation, the processing unit 1102 is configured to determine, based on a scheduling situation of the network device, to send the DCI to the terminal device based on the second information or the first information. When the network device determines to send the DCI to the terminal device based on the second information, the communication unit 1101 is configured to send third information to the terminal device, where the third information notifies the network device to send the DCI to the terminal device based on the second information. The communication unit 1101 is configured to send the DCI to the terminal device through the PDCCH based on the second information, where the quantity of pieces of DCI in the first span is less than or equal to the quantity M.

In a possible implementation, when the network device determines to send the DCI to the terminal device based on the first information, the communication unit 1101 is configured to send fourth information to the terminal device, where the fourth information notifies the network device to send the DCI to the terminal device based on the first information. The communication unit 1101 is further configured to send the DCI to the terminal device through the PDCCH, where the quantity of pieces of DCI in the first span is less than or equal to the quantity N.

In a possible implementation, the second information is radio resource control RRC signaling, media access control MAC signaling, or assistance information.

In a possible implementation, in the first scenario mode, power consumption of the terminal device is less than a first value, or a ratio of a downlink slot to an uplink slot in the PDCCH is greater than a second value, or a delay requirement of data transmission of the terminal device is greater than a third value.

FIG. 12 shows a communication apparatus according to an embodiment of this application. The communication apparatus is configured to implement functions of the terminal device in FIG. 5, FIG. 6, FIG. 7, or FIG. 9. The apparatus may be the terminal device or an apparatus used in the terminal device. The apparatus used in the terminal device may be a chip system or a chip in the terminal device. The chip system may include a chip, or may include a chip and another discrete component.

Alternatively, the communication apparatus in FIG. 12 is configured to implement functions of the network device in FIG. 5, FIG. 6, FIG. 7, or FIG. 9. The apparatus may be a network device or an apparatus used in the network device. The apparatus used in the network device may be a chip system or a chip in the network device.

The communication apparatus includes at least a processor 1220, configured to implement a data processing function of the terminal device or the network device in the methods provided in embodiments of this application. The communication apparatus may further include a communication interface 1210, configured to implement receiving and sending operations of the terminal device or the network device in the methods provided in embodiments of this application. In this embodiment of this application, the communication interface may be a transceiver, a circuit, a bus, a module, or a communication interface of another type, and is configured to communicate with another device by using a transmission medium. For example, the communication interface 1210 is used by an apparatus in the communication apparatus to communicate with another device. The processor 1220 receives and sends data through the communication interface 1210, and is configured to implement the methods in FIG. 5, FIG. 6, FIG. 7, or FIG. 9 in the foregoing method embodiments.

The communication apparatus may further include at least a memory 1230, configured to store program instructions and/or data. The memory 1230 is coupled to the processor 1220. The coupling in this embodiment of this application is an indirect coupling or a communication connection between apparatuses, units, or modules in an electrical form, a mechanical form, or another form, and is used for information exchange between the apparatuses, the units, or the modules. The processor 1220 may operate in collaboration with the memory 1230. The processor 1220 may execute the program instructions stored in the memory 1230. At least one of the at least one memory may be included in the processor.

After the communication apparatus in FIG. 12 is powered on, the processor 1220 may read a software program in the memory 1230, to interpret and execute instructions of the software program, and process data of the software program. When data needs to be sent wirelessly, after performing baseband processing on the to-be-sent data, the processor 1220 outputs a baseband signal to a radio frequency circuit (not shown in the figure). The radio frequency circuit performs radio frequency processing on the baseband signal, and then sends a radio frequency signal in a form of an electromagnetic wave by using an antenna. When data is sent to the communication apparatus in FIG. 12, the radio frequency circuit receives the radio frequency signal by using the antenna, converts the radio frequency signal into the baseband signal, and outputs the baseband signal to the processor 1220. The processor 1220 converts the baseband signal into data and processes the data.

In another implementation, the radio frequency circuit and the antenna may be disposed independent of the processor 1220 that performs baseband processing. For example, in a distributed scenario, the radio frequency circuit and the antenna may be disposed remotely and independent of the communication apparatus.

In this embodiment of this application, a specific connection medium between the communication interface 1210, the processor 1220, and the memory 1230 is not limited. In this embodiment of this application, the memory 1230, the processor 1220, and the communication interface 1210 are connected through a bus 1240 in FIG. 12. The bus is represented by using a bold line in FIG. 12. A connection manner between other components is merely an example for description, and is not limited thereto. The bus may be classified into an address bus, a data bus, a control bus, and the like. For ease of representation, only one thick line is used to represent the bus in FIG. 12, but this does not mean that there is only one bus or only one type of bus.

When the communication apparatus in FIG. 12 is specifically an apparatus used in the terminal device or the network device, for example, when the communication apparatus is specifically a chip or a chip system, the communication interface 1210 may output or receive the baseband signal. When the communication apparatus is specifically the terminal device or the network device, the communication interface 1210 may output or receive the radio frequency signal. In this embodiment of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, operations, and logical block diagrams disclosed in embodiments of this application. The general-purpose processor may be a microprocessor, any conventional processor, or the like. The operations in the methods disclosed with reference to embodiments of this application may be directly performed and completed by a hardware processor, or may be performed and completed by a combination of hardware and software modules in the processor.

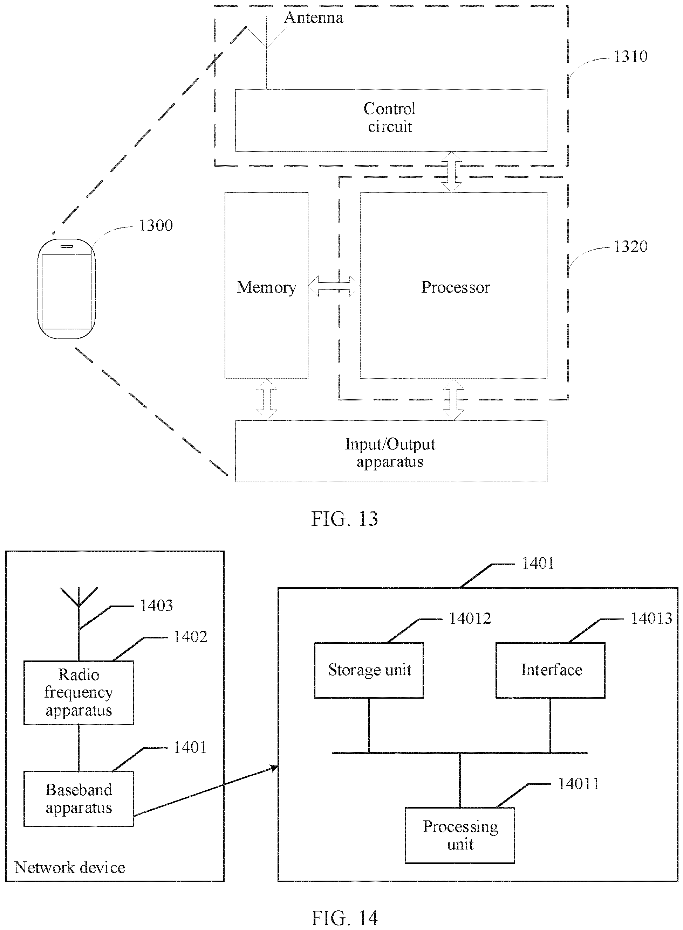

FIG. 13 is a schematic structural diagram of a terminal device according to an embodiment of this application.

The terminal device 1300 may be applicable to the architecture shown in any one of FIG. 5, FIG. 6, FIG. 7, or FIG. 9. For ease of description, FIG. 13 shows only main components of the terminal device 1300. As shown in FIG. 13, the terminal device 1300 includes a processor, a memory, a control circuit, an antenna, and an input/output apparatus. The processor is mainly configured to: process a communication protocol and communication data, control the entire terminal device 1300, execute a software program, and process data of the software program. The memory is mainly configured to store the software program and the data. The control circuit is mainly configured to: convert a baseband signal and a radio frequency signal and process the radio frequency signal. The antenna is mainly configured to receive and send a radio frequency signal in a form of an electromagnetic wave. The input/output apparatus, such as a touchscreen, a display, a microphone, or a keyboard, is mainly configured to receive data input by a user and output data to the user.

Persons skilled in the art may understand that, for ease of description, FIG. 13 shows only one memory and one processor. In some embodiments, the terminal device 1300 may include a plurality of processors and memories. The memory may also be referred to as a storage medium, a storage device, or the like. This is not limited in embodiments of this application.

In an example, the antenna and the control circuit that have sending and receiving functions may be considered as a transceiver unit 1310 of the terminal device 1300, and the processor having a processing function may be considered as a processing unit 1320 of the terminal device 1300. As shown in FIG. 13, the terminal device 1300 includes the transceiver unit 1310 and the processing unit 1320. The transceiver unit may also be referred to as a transceiver machine, a transceiver, a transceiver apparatus, or the like. Optionally, a component that is in the transceiver unit 1310 and that is configured to implement a receiving function may be considered as a receiving unit, and a component that is in the transceiver unit 1310 and that is configured to implement a sending function may be considered as a sending unit. In other words, the transceiver unit 1310 includes the receiving unit and the sending unit. For example, the receiving unit may also be referred to as a receiver, a receiving machine, or a receiving circuit, and the sending unit may also be referred to as a transmitter, a transmitting machine, or a transmitting circuit.

FIG. 14 is a schematic structural diagram of a network device according to an embodiment of this application. The network device may be applicable to the architecture shown in any one of FIG. 5, FIG. 6, FIG. 7, or FIG. 9. The network device includes a baseband apparatus 1401, a radio frequency apparatus 1402, and an antenna 1403. In an uplink direction, the radio frequency apparatus 1402 receives, by using the antenna 1403, information sent by a terminal device, and sends, to the baseband apparatus 1401 for processing, the information sent by the terminal device. In a downlink direction, the baseband apparatus 1401 processes information of the terminal device, and sends the information to the radio frequency apparatus 1402. The radio frequency apparatus 1402 processes the information of the terminal device, and then sends the processed information to the terminal device by using the antenna 1403.

The baseband apparatus 1401 includes one or more processing units 14011, storage units 14012, and interfaces 14013. The processing unit 14011 is configured to support the network device in performing functions of the network device in the foregoing method embodiments. The storage unit 14012 is configured to store a software program and/or data. The interface 14013 is configured to exchange information with the radio frequency apparatus 1402. The interface includes an interface circuit, configured to input and output information. In an implementation, the processing unit is an integrated circuit, for example, one or more ASICs, one or more digital signal processors (digital signal processors, DSPs), one or more field programmable gate arrays (field programmable gate arrays, FPGAs), or a combination of these integrated circuits. The storage unit 14012 may be located in a same circuit, namely, an on-chip storage element, as the processing unit 14011. Alternatively, the storage unit 14012 may be located on a different chip, namely, an offchip storage element, from the processing unit 14011. The storage unit 14012 may be one memory, or may be a collective name of a plurality of memories or storage elements.

The network device may implement some or all of the steps in the foregoing method embodiments by using one or more processing units to schedule a program. For example, corresponding functions of the network device in any one of the embodiments shown in FIG. 5, FIG. 6, FIG. 7, and FIG. 9 is implemented. The one or more processing units may support radio access technologies of a same standard, or may support radio access technologies of different standards.

An embodiment of this application further provides a computer-readable storage medium. The computer-readable storage medium stores instructions. When the instructions run on a processor, the method procedures in the foregoing method embodiments are implemented.

An embodiment of this application further provides a computer program product. When the computer program product runs on a processor, the method procedures in the foregoing method embodiments are implemented.

It should be noted that, for brief description, the foregoing method embodiments are represented as a series of action combinations. However, persons skilled in the art should understand that this application is not limited to the described action sequence, because some operations may be performed in other sequences or simultaneously according to this application. In addition, persons skilled in the art should also aware that the described embodiments in this specification all belong to preferable embodiments, and the involved actions and modules are not necessarily required by this application.

Cross reference may be made to descriptions of embodiments provided in this application, the description of each embodiment has its emphasis, and for parts that are not described in detail in an embodiment, refer to the related descriptions of another embodiment. For ease of description and brevity, for functions and executed operations of the apparatuses and devices according to embodiments of this application, refer to the related descriptions of the method embodiments of this application. The method embodiments and the apparatus embodiments may also be mutually referenced, combined, or cited.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A downlink control information DCI sending method, wherein the method comprises:
sending, by a terminal device, first information to a network device, wherein the first information indicates a quantity N, and the quantity N comprises a quantity of pieces of DCI that the terminal device supports to receive in a first span of a physical downlink control channel PDCCH; and
receiving, by the terminal device, the DCI on the PDCCH, wherein the quantity of pieces of DCI in the first span is less than or equal to the quantity N.

2. The method according to claim 1, wherein the method further comprises:
determining, by the terminal device, the quantity N based on performance requirement information of the terminal device, wherein the performance requirement information comprises one or more of power consumption information, terminal type information, or transmission performance information.

3. The method according to claim 1 or 2, wherein the method further comprises:
when the terminal device is in a first scenario mode, sending, by the terminal device, second information to the network device, wherein the second information indicates a quantity M, the quantity M comprises a quantity of pieces of DCI that the terminal device requests to receive in the first span of the PDCCH in the first scenario mode, and the quantity M is a positive integer greater than 0 and less than the quantity N.

4. The method according to claim 3, wherein the method further comprises:
receiving, by the terminal device, third information from the network device, wherein the third information notifies the network device to send the PDCCH to the terminal device based on the second information.

5. The method according to claim 3, wherein the method further comprises:
receiving, by the terminal device, fourth information from the network device, wherein the fourth information notifies the network device to send the PDCCH to the terminal device based on the first information.

6. The method according to any one of claims 3 to 5, wherein the second information is radio resource control RRC signaling, media access control MAC signaling, or assistance information.

7. The method according to any one of claims 3 to 6, wherein in the first scenario mode, power consumption of the terminal device is less than a first value, or a ratio of a downlink slot to an uplink slot in the PDCCH is greater than a second value, or a delay requirement of data transmission of the terminal device is greater than a third value.

8. A downlink control information DCI sending method, wherein the method comprises:
receiving, by a network device, first information from a terminal device, wherein the first information indicates a quantity N, and the quantity N comprises a quantity of pieces of DCI that the terminal device supports to receive in a first span of a physical downlink control channel PDCCH; and
sending, by the network device, the DCI to the terminal device through the PDCCH, wherein a valid quantity of pieces of DCI in the first span is less than or equal to the quantity N.

9. The method according to claim 8, wherein the method further comprises:
when the terminal device is in a first scenario mode, receiving, by the network device, second information from the terminal device, wherein the second information indicates a quantity M, the quantity M comprises a quantity of pieces of DCI that the terminal device requests to receive in the first span of the PDCCH in the first scenario mode, and the quantity M is a positive integer greater than 0 and less than the quantity N.

10. The method according to claim 9, wherein the sending, by the network device, the DCI to the terminal device through the PDCCH comprises:
determining, by the network device based on a scheduling situation of the network device, to send the DCI to the terminal device based on the second information or the first information;
when the network device determines to send the DCI to the terminal device based on the second information, sending, by the network device, third information to the terminal device, wherein the third information notifies the network device to send the DCI to the terminal device based on the second information; and
sending, by the network device, the DCI to the terminal device through the PDCCH based on the second information, wherein the quantity of pieces of DCI in the first span is less than or equal to the quantity M.

11. The method according to claim 10, wherein the method further comprises:
when the network device determines to send the DCI to the terminal device based on the first information, sending, by the network device, fourth information to the terminal device, wherein the fourth information notifies the network device to send the DCI to the terminal device based on the first information; and
sending, by the network device, the DCI to the terminal device through the PDCCH, wherein the quantity of pieces of DCI in the first span is less than or equal to the quantity N.

12. The method according to any one of claims 9 to 11, wherein the second information is radio resource control RRC signaling, media access control MAC signaling, or assistance information.

13. The method according to any one of claims 9 to 12, wherein in the first scenario mode, power consumption of the terminal device is less than a first value, or a ratio of a downlink slot to an uplink slot in the PDCCH is greater than a second value, or a delay requirement of data transmission of the terminal device is greater than a third value.

14. A communication apparatus, wherein the communication apparatus comprises a communication unit and a processing unit, wherein
the communication unit is configured to: send first information to a network device, wherein the first information indicates a quantity N, and the quantity N comprises a quantity of pieces of DCI that a terminal device supports to receive in a first span of a physical downlink control channel PDCCH; and receive the DCI on the PDCCH, wherein the quantity of pieces of DCI in the first span is less than or equal to the quantity N.

15. The apparatus according to claim 14, wherein the processing unit is further configured to determine the quantity N based on performance requirement information of the terminal device, wherein the performance requirement information comprises one or more of power consumption information, terminal type information, or transmission performance information.

16. The apparatus according to claim 14 or 15, wherein when the terminal device is in a first scenario mode, the communication unit is configured to send second information to the network device, wherein the second information indicates a quantity M, the quantity M comprises a quantity of pieces of DCI that the terminal device requests to receive in the first span of the PDCCH in the first scenario mode, and the quantity M is a positive integer greater than 0 and less than the quantity N.

17. The apparatus according to claim 16, wherein the communication unit is further configured to receive third information from the network device, wherein the third information notifies the network device to send the PDCCH to the terminal device based on the second information.

18. The apparatus according to claim 16, wherein the communication unit is further configured to receive fourth information from the network device, wherein the fourth information notifies the network device to send the PDCCH to the terminal device based on the first information.

19. The apparatus according to any one of claims 16 to 18, wherein the second information is radio resource control RRC signaling, media access control MAC signaling, or assistance information.

20. The apparatus according to any one of claims 16 to 19, wherein in the first scenario mode, power consumption of the terminal device is less than a first value, or a ratio of a downlink slot to an uplink slot in the PDCCH is greater than a second value, or a delay requirement of data transmission of the terminal device is greater than a third value.

21. A communication apparatus, wherein the communication apparatus comprises a communication unit and a processing unit, wherein
the communication unit is configured to: receive first information from a terminal device, wherein the first information indicates a quantity N, and the quantity N comprises a quantity of pieces of DCI that the terminal device supports to receive in a first span of a physical downlink control channel PDCCH; and send the DCI to the terminal device through the PDCCH, wherein a valid quantity of pieces of DCI in the first span is less than or equal to the quantity N.

22. The apparatus according to claim 21, wherein when the terminal device is in a first scenario mode, the communication unit is configured to receive second information from the terminal device, wherein the second information indicates a quantity M, the quantity M comprises a quantity of pieces of DCI that the terminal device requests to receive in the first span of the PDCCH in the first scenario mode, and the quantity M is a positive integer greater than 0 and less than the quantity N.

23. The apparatus according to claim 22, wherein
the processing unit is configured to determine, based on a scheduling situation of a network device, to send the DCI to the terminal device based on the second information or the first information; and
when the network device determines to send the DCI to the terminal device based on the second information, the communication unit is configured to: send third information to the terminal device, wherein the third information notifies the network device to send the DCI to the terminal device based on the second information; and send the DCI to the terminal device based on the second information through the PDCCH, wherein the quantity of pieces of DCI in the first span is less than or equal to the quantity M.

24. The apparatus according to claim 23, wherein when the network device determines to send the DCI to the terminal device based on the first information, the communication unit is configured to: send fourth information to the terminal device, wherein the fourth information notifies the network device to send the DCI to the terminal device based on the first information; and send the DCI to the terminal device through the PDCCH, wherein the quantity of pieces of DCI in the first span is less than or equal to the quantity N.

25. The apparatus according to any one of claims 22 to 24, wherein the second information is radio resource control RRC signaling, media access control MAC signaling, or assistance information.

26. The apparatus according to any one of claims 22 to 25, wherein in the first scenario mode, power consumption of the terminal device is less than a first value, or a ratio of a downlink slot to an uplink slot in the PDCCH is greater than a second value, or a delay requirement of data transmission of the terminal device is greater than a third value.

27. A communication apparatus, comprising a processor and a memory, wherein the memory is configured to store one or more computer programs, the one or more computer programs comprise computer-executable instructions, and when the communication apparatus is run, the processor executes the one or more computer programs stored in the memory, to enable the communication apparatus to perform the method according to any one of claims 1 to 7.

28. A communication apparatus, comprising a processor and a memory, wherein the memory is configured to store one or more computer programs, the one or more computer programs comprise computer-executable instructions, and when the communication apparatus is run, the processor executes the one or more computer programs stored in the memory, to enable the communication apparatus to perform the method according to any one of claims 8 to 13.

29. A computer-readable storage medium, wherein the computer-readable storage medium is configured to store a computer program, and when the computer program is run on a computer, the computer is enabled to perform the method according to any one of claims 1 to 7.

30. A computer-readable storage medium, wherein the computer-readable storage medium is configured to store a computer program, and when the computer program is run on a computer, the computer is enabled to perform the method according to any one of claims 8 to 13.

31. A computer program product, wherein when the computer program product runs on a computer, the computer is enabled to perform the method according to any one of claims 1 to 13.

32. A circuit system, wherein the circuit system comprises:
a processor and an interface, wherein the processor is configured to: invoke instructions from the interface and run the instructions, and when executing the instructions, the processor implements the method according to any one of claims 1 to 7, or implements the method according to any one of claims 8 to 13.
